# EUROPÄISCHE PATENTSCHRIFT

(11) **EP 0 794 821 B1**
(45) Veröffentlichungstag und Bekanntmachung des Hinweises auf die Patenterteilung: **13.05.1998**
(21) Anmeldenummer: 95942082.9
(22) Anmeldetag: 08.12.1995
(51) Int. Cl.: B01D 1/00, B01D 1/16, C23C 16/44

(54) **VERFAHREN UND VORRICHTUNG ZUR ÜBERFÜHRUNG EINES FLÜSSIGKEITSSTROMES IN EINEN GASSTROM**
PROCESS AND DEVICE FOR TRANSFORMING A LIQUID STREAM INTO A GAS STREAM
PROCEDE ET DISPOSITIF POUR FAIRE TRANSFORMER UN COURANT DE LIQUIDE EN UN COURANT DE GAZ

(30) Priorität: 31.01.1995 DE 19502944
(43) Veröffentlichungstag der Anmeldung: 17.09.1997
(73) Patentinhaber: FRAUNHOFER-GESELLSCHAFT ZUR FÖRDERUNG DER ANGEWANDTEN FORSCHUNG E.V., 80636 München (DE)
(72) Erfinder: STRZYZEWSKI, Piotr, D-91080 Ultenreuth (DE); ROEDER, Georg, D-91052 Erlangen (DE); PFITZNER, Lothar, D-91054 Erlangen (DE); RYSSEL, Heiner, D-91080 Spardorf (DE)
(74) Vertreter: Schoppe, Fritz, Dipl.-Ing.
(86) Internationale Anmeldenummer: EP9504846
(87) Internationale Veröffentlichungsnummer: WO9623564

(56) Entgegenhaltungen:
- APPLIED PHYSICS LETTERS, Bd. 56, Nr. 25, 18.Juni 1990 NEW-YORK, Seiten 2522-2523, XP 000174366 W.J. DESISTO AND R.L. HENRY 'deposition of (100) oriented mgo thin films on sapphire by spray pyrollysis method'
- PATENT ABSTRACTS OF JAPAN vol. 14 no. 77 (C-688) ,14.Februar 1990 & JP,A,01 294525 (TOA NENRYO KOGYO KK) 28.November 1989,
- PATENT ABSTRACTS OF JAPAN vol. 6 no. 90 (C-104) [968] ,27.Mai 1982 & JP,A,57 022136 (NIPPON DENSHIN DENWA KOSHA) 5.Februar 1982,
- PATENT ABSTRACTS OF JAPAN vol. 6 no. 226 (E-141) [1104] ,11.November 1982 & JP,A,57 128035 (HITACHI SEISAKUSHO K.K.) 9.August 1982,
- PATENT ABSTRACTS OF JAPAN vol. 9 no. 254 (C-308) [1977] ,11.Oktober 1985 & JP,A,60 108338 (NIPPON DENSHIN DENWA KOSHA) 13.Juni 1985,
- PATENT ABSTRACTS OF JAPAN vol. 8 no. 202 (P-300) [1639] ,14.September 1984 & JP,A,59 087406 (NIPPON DENSHIN DENWA KOSHA) 21.Mai 1984,

## Beschreibung

Die vorliegende Erfindung bezieht sich auf ein Verfahren und eine Vorrichtung zum Überführen eines Flüssigkeitsstromes in einen Gasstrom und insbesondere auf ein Verfahren und eine Vorrichtung zum Überführen eines Flüssigkeitsstromes in einen Gasstrom durch Dispergieren.

Verschiedene Verfahren zum Überführen eines Flüssigkeitsstromes in einen Gasstrom sind bekannt. Sie finden beispielsweise dort ihre Verwendung, wo flüssige Chemikalien in die Gasphase überführt werden müssen, wie z. B. bei der Durchführung bestimmter chemischer Abscheidungsprozesse in der Halbleitertechnologie.

Das bekannteste Verfahren zum Überführen eines Flüssigkeitsstromes in die Gasphase ist das sogenannte Bubbler-Verfahren. Hierbei wird die zu verdampfende Flüssigkeit auf eine bestimmte Temperatur erwärmt und ein sogenanntes Trägergas, z. B. Stickstoff oder Sauerstoff, wird kontinuierlich unter die Oberfläche der zu verdampfenden Flüssigkeit eingeleitet. Die Trägergasbläschen steigen in der Flüssigkeit auf und werden mit dem Dampf der Flüssigkeit gesättigt. In einem abgeschlossenen Volumen über der Flüssigkeitsoberfläche entsteht ein Gemisch aus Dampf und Trägergas, das z. B. in einen angeschlossenen Reaktor abgeführt wird und bei den oben genannten chemischen Abscheidungsprozessen verwendet wird. Bei einem entsprechend niedrigen Gegendruck (z. B. Reaktordruck) und hohem Dampfdruck der Flüssigkeit kann ein Dampfstrom auch ohne Trägergas erzeugt werden. Hierbei sind jedoch abhängig vom Dampfdruck der Flüssigkeit hohe Flüssigkeitstemperaturen erforderlich.

Das oben beschriebene Bubbler-Verfahren ist zwar bezüglich der verwendeten Vorrichtung einfach, die Regelung des Dampfstromes ist jedoch sehr schwierig. Der Massenstrom des Dampf/Gas-Gemisches wird durch die Temperatur der Flüssigkeit, den Druck oberhalb der Flüssigkeitsoberfläche und die Trägergasdurchflußrate bestimmt. Zusätzlich können die Trägergastemperatur und die Höhe der Flüssigkeitssäule die Stabilität und Kontinuität des Dampfstromes beeinflussen. Bei diesem bekannten Verfahren sind größere Schwankungen des Massenstromes bis zu vollständigen Unterbrechung desselben durch Gaseinschlüsse möglich. Im allgemeinen ist eine Beimischung eines Trägergases aus technologischen Gründen nicht immer vorteilhaft.

Ein weiteres Verfahren beruht darauf, einen Verdampfungsprozeß zu erreichen, der als Flash-Verdampfen bezeichnet wird. Flash-Verdampfungsprozesse werden üblicherweise zum Verdampfen von Materialien mit unterschiedlichen Dampfdrücken verwendet. Die erwünschte Zusammensetzung der Gasmischung wird dadurch erreicht, daß kleine Mengen des Ausgangsmaterials in definierter Zusammensetzung vollständig verdampft werden. Es wird hierbei bezüglich der Einbringung des Materials, des Verfahrens zur Verteilung des verdampfenden Materials und der Heizung unterschieden.

Ein wesentlicher Nachteil dieses Verfahrens besteht darin, daß es aufwendig und schwierig ist, eine gleichmäßige Flüssigkeitsverteilung im Verdampfer zu erreichen. Beim Flash-Verdampfungsverfahren wird die Flüssigkeit mit einem Massendurchflußregler oder mit einer Dosierpumpe in den Verdampfer eingebracht. Der Massendurchflußregler liefert Flüssigkeit unter einem sehr geringen Druck, was ihre gleichmäßige Verteilung über die meist große Verdampferfläche erschwert. Hierdurch können Temperaturinhomogenitäten durch unterschiedliche Abkühlungsprozesse entstehen, was eine lokale Kondensation zur Folge hat. Die Dosierpumpe kann einen hohen Druck erzeugen, was jedoch bei Gaseinschlüssen in der Flüssigkeit dazu führt, daß der Flüssigkeitsstrom gestört oder vollständig unterbrochen wird.

Ein weiteres Verfahren, das in der europäischen Patentanmeldung EP-A-0559259 offenbart ist, beruht darauf, daß eine zu verdampfende Flüssigkeit in eine Mischkammer eingebracnt wird und dort gleichzeitig in unmittelbarer Nähe der Flüssigkeitseinlaßdüse ein Trägergasstrom eingeleitet wird. Die Einleitung des Trägergasstromes erfolgt hierbei unter so hohem Druck, daß bereits unmittelbar hinter dar Flüssigkeitseinlaßdüse ein Flüssigkeit/Gas-Gemisch entsteht, das in einen Verdampferraum eingebracht wird. In dem Verdampferraum kann Wärme zugeführt werden, so daß die Flüssigkeit verdampft und ein Gasgemisch entsteht, das abschließend aus dem Verdampferraum abgeleitet wird.

Weitere bekannte Verfahren beruhen darauf, eine zu verdampfende Flüssigkeit auf eine große, erwärmte Oberfläche aufzubringen und dadurch eine gute Wärmeübertragung und ein schnelles Verdampfen zu erreichen.

Die Veröffentlichung Applied Physics Letters, Band 56, Nr. 25, Seiten 2522 und 2523 beschreibt ein Verfahren zum Aufsprühen innerhalb eines Pyrolysereaktors. Eine Flüssigkeit wird einer Ultraschalldüse zugeführt, durch die sie zerstäubt wird. Die zerstäubte Flüssigkeit wird durch einen Sauerstoffstrom mitgenommen.

Patent Abstracts of Japan, Band 14, Nr. 77 entsprechend JP-A-1294525 betrifft das Sprühen einer Lösung mit Metallkomponenten unter Verwendung einer Ultraschallsprüheinrichtung. Dieser Schrift ist nicht entnehmbar, ob hier das Zersprühen der Flüssigkeit mit oder ohne Druckänderung erfolgt oder mit oder ohne Beimischung eines Mediums vorgenommen wird.

Patent Abstracts of Japan, Band 6, Nr. 90 entsprechend JP-A-57022136 betrifft die Herstellung optischer Glasfasern. Eine glasbildende Rohmaterialflüssigkeit wird zu einem Reservoir zugeführt und mittels einer Vibrationsenergie, die von einem Ultraschallvibrator geliefert wird, zerstäubt, wobei ein in das Reservoir eingeführtes Inertgas das Material zu einem Auslaß befördert.

Ausgehend von dem oben beschriebenen Stand der Technik liegt der vorliegenden Erfindung die Aufgabe zugrunde, ein Verfahren und eine Vorrichtung zum Überführen eines Flüssigkeitsstromes in einen Gasstrom zu schaffen, bei dem die Regelung des entstehenden Dampfstromes einfach ist, sich eine gleichmäßige Flüssigkeitsverteilung im Verdampfer einstellt, ein vollständiges Verdampfen der Flüssigkeit sichergestellt ist und keine Störungen oder Unterbrechungen des Flüssigkeitsstromes auftreten.

Diese Aufgabe wird durch ein Verfahren nach Anspruch 1 und durch eine Vorrichtung nach Anspruch 6 gelöst.

Ein Vorteil der vorliegenden Erfindung besteht darin, daß die Überführung eines Flüssigkeitsstromes in einen Gasstrom derart erfolgt, daß sichergestellt ist, daß nach dem Einlaß der Flüssigkeit eine Vergrößerung der Flüssigkeitsoberfläche erfolgt, wodurch nachfolgend ein schnelles und vollständiges Verdampfen erreicht wird, so daß ein stabiler, kontinuierlicher Dampf/Gas-Strom entsteht.

Ein bevorzugtes Ausführungsbeispiel der erfindungsgemäßen Vorrichtung zur Durchführung des erfindungsgemäßen Verfahrens wird anhand der beiliegenden Figur näher erläutert. Es zeigt:

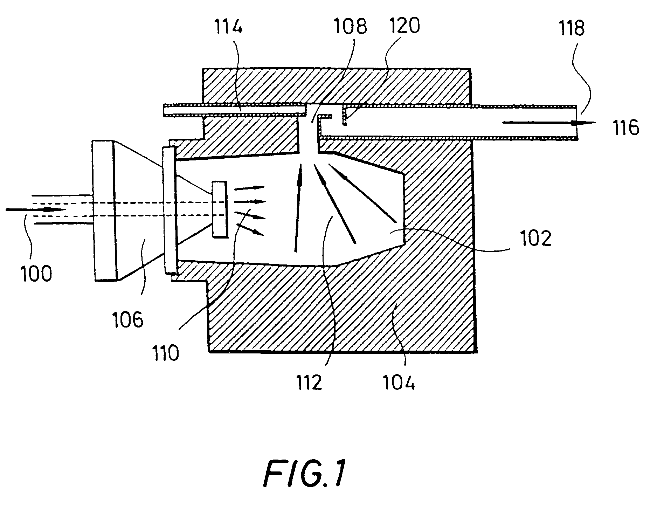

- Fig. 1: eine Vorrichtung zum Überführen eines Flüssigkeitsstromes in einen Gasstrom.

Vor der Beschreibung der erfindungsgemäßen Vorrichtung zum Überführen eines Flüssigkeitsstromes in einen Gasstrom wird nachfolgende das erfindungsgemäße Verfahren beschrieben.

In einem ersten Schritt wird ein zu verdampfender Flüssigkeitsstrom durch eine Öffnung in ein sogenanntes Verdampfungsvolumen eingebracht. In diesem Verdampfungsvolumen erfolgt anschließend die Verdampfung.

In einem nächsten Schritt erfolgt das Dispergieren des Flüssigkeitsstromes, wodurch sich eine erhebliche Vergrößerung der Flüssigkeitsoberfläche ergibt. Dieses Dispergieren wird nicht durch eine Druckänderung bedingt und erfolgt ohne Beimischung eines Mediums. Hierdurch erfolgt das Dispergieren mit einem solchen Wirkungsgrad, daß sich in dem Verdampfungsvolumen im wesentlichen kein nicht-dispergierter Flüssigkeitsanteil bildet. Aufgrund des Dispergierens der Flüssigkeit verdampft diese schnell, so daß sich im wesentlichen kein nicht-dispergierter Flüssigkeitsanteil im Verdampfungsvolumen ausbildet.

In einem darauffolgenden Schritt wird der verdampfte Flüssigkeitsstrom aus dem Verdampfungsvolumen herausgeführt.

Für das erfindungsgemäße Verfahren ist es wesentlich, daß bei der Flüssigkeitszufuhr das Dispergieren und Verdampfen vollständig und ohne zeitliche Verzögerung abläuft. Dadurch wird sichergestellt, daß die gesamte zugeführte Flüssigkeit ausreichend schnell dispergiert wird, wobei das Dispergieren sicherstellt, daß das Verdampfen schnell abläuft.

Bei einem bevorzugten Ausführungsbeispiel der vorliegenden Erfindung wird das Dispergieren durch Ausüben einer mechanischen Schwingung auf die Flüssigkeit bewirkt. Diese mechanischen Schwingungen können beispielsweise durch einen Ultraschallwandler erzeugt werden, so daß das Dispergieren durch Ultraschallwellen erfolgt.

Bei einem weiteren bevorzugten Ausführungsbeispiel der vorliegenden Erfindung wird dem verdampften Flüssigkeitsstrom nach dem Verlassen des Verdampfungsvolumens ein oder mehrere Trägergase und/oder Prozeßgase hinzugemischt und der sich ergebende Dampf/Gas-Strom wird über einen Auslaß abgeleitet.

Abhängig von der zu verdampfenden Flüssigkeit kann das Verdampfungsvolumen auf eine vorbestimmte Temperatur aufgeheizt werden. Hierbei erfolgt die Zufuhr der Wärmeenergie so schnell, daß in dem Verdampfungsvolumen keine Bildung einer nicht-dispergierten flüssigen Phase stattfindet, d.h., daß eine vollständige Verdampfung des Flüssigkeitsstromes sichergestellt wird.

Gemäß einem weiteren Ausführungsbeispiel umfaßt das erfindungsgemäße Verfahren einen Schritt, durch den nicht-verdampfte Flüssigkeitsanteile zurückgehalten werden, so daß ausgeschlossen werden kann, daß nicht-verdampfte Flüssigkeitsanteile den oder die Auslässe erreichen.

Anhand von Fig. 1 wird im folgenden eine Vorrichtung zum Überführen des Flüssigkeitsstromes in einen Gasstrom näher beschrieben.

Über eine Einlaßeinrichtung 100 erfolgt der Einlaß einer zu verdampfenden Flüssigkeit in ein Verdampfungsvolumen 102. Dieses Verdampfungsvolumen 102 ist eine in einem Verdampfungskörper 104 angeordnete Ausnehmung.

Ein dispergierendes Element 106 ist derart auf dem Verdampfungsvolumen 102 angeordnet, daß es das Verdampfungsvolumen 102 abdeckt.

Das dispergierende Element 106 dispergiert den Flüssigkeitsstrom durch Ausüben einer mechanischen Schwingung auf diesen, wobei das Dispergieren hierbei nicht durch eine Druckänderung bedingt ist und ohne Beimischung eines Mediums erfolgt.

Die erfindungsgemäße Vorrichtung weist ferner eine Auslaßeinrichtung 108 auf.

Bei dem in Fig. 1 dargestellten bevorzugten Ausführungsbeispiel weist das dispergierende Element 106 einen Ultraschallwandler auf, so daß das Dispergieren durch Ultraschallwellen erfolgt.

Die dispergierte Flüssigkeit 110 befindet sich nach dem Einlaß in dem Verdampfungsvolumen 102, in dem sie vollständig verdampft, d.h., daß sie in einen Gasstrom 112 überführt wird.

Die Auslaßeinrichtung 108 des in Fig. 1 dargestellten Ausführungsbeispiels der vorliegenden Erfindung umfaßt eine Beimischvorrichtung 114, die das Hinzumischen eines oder mehrerer Trägergase zu dem verdampften Flüssigkeitsstrom ermöglicht, so daß sich ein Dampf/Gas-Strom 116 ergibt, der über einen Auslaß 118 die erfindungsgemäße Vorrichtung verläßt. Die im Bezug auf die vorliegende Erfindung im weiteren als Trägergase bezeichneten Gase können auch an dem betreffenden Prozeß beteiligt sein. Derartige Gase werden dann üblicherweise als Prozeßgase bezeichnet.

Um ein Austreten von nicht-verdampfter Flüssigkeit zu vermeiden, weist die Auslaßeinrichtung 108 zusätzlich eine Vorrichtung 120 auf, die eben dieses Austreten von nichtverdampfter Flüssigkeit verhindert.

Gemäß einem weiteren, nicht dargestellten Ausführungsbeispiel der vorliegenden erfindungsgemäßen Vorrichtung kann diese zusätzlich eine Heizvorrichtung umfassen, mit der das Verdampfungsvolumen 102 auf eine von der zu verdampfenden Flüssigkeit abhängigen Temperatur aufheizbar ist, so daß sich eine vollständige Verdampfung der dispergierten Flüssigkeit 110 in einen Gasstrom 112 einstellt.

Es ist offensichtlich, daß die vorliegende Erfindung nicht auf eine Vorrichtung mit einem Auslaß beschränkt ist, sondern daß diese selbstverständlich einen oder mehrere Auslässe aufweisen kann, durch die ein Herausführen des entstehenden Dampf/Gas-Stromes möglich ist.

## Patentansprüche

1. Verfahren zum Überführen eines Flüssigkeitsstromes in einen Gasstrom, mit den folgenden Verfahrensschritten:
- Einbringen des Flüssigkeitsstromes in ein Verdampfungsvolumen (102);
- Zuführen von Wärme zu dem Verdampfungsvolumen (102);
- Dispergieren des Flüssigkeitsstromes im Verdampfungsvolmen (102) zur Vergrößerung der Flüssigkeitsoberfläche, wobei das Dispergieren durch Ausüben einer mechanischen Schwingung auf die Flüssigkeit bewirkt wird, nicht durch eine Druckänderung bedingt ist und ohne Beimischung eines Mediums in das Verdampfungsvolumen (102) erfolgt; und
- Herausführen des verdampften Flüssigkeitsstromes aus dem Verdampfungsvolumen (102).

2. Verfahren nach Anspruch 1, gekennzeichnet durch folgende Verfahrensschritte:
- Hinzumischen eines oder mehrerer Trägergase und/oder Prozeßgase zu dem verdampften Flüssigkeitsstrom (112), nach dem dieser das Verdampfungsvolumen (102) verlassen hat; und
- Herausführen des sich ergebenden Gasstromes (116) über einen Auslaß (118).

3. Verfahren nach Anspruch 1 oder 2, gekennzeichnet durch folgenden Verfahrensschritt:
- Aufheizen des Verdampfungsvolumens (102) auf eine von der zu verdampfenden Flüssigkeit abhängigen Temperatur derart, daß die dispergierte Flüssigkeit (110) vollständig verdampft.

4. Verfahren nach einem der Ansprüche 1 oder 2, gekennzeichnet durch folgenden Verfahrensschritt:
- Zurückhalten von nicht-verdampfter Flüssigkeit, so daß keine nicht-verdampfte Flüssigkeit austritt.

5. Verfahren nach einem der Ansprüche 1 bis 4, dadurch gekennzeichnet,
daß das Dispergieren durch Ultraschallwellen erfolgt.

6. Vorrichtung zum Überführen eines Flüssigkeitsstromes in einen Gasstrom, mit einem Verdampfungsvolumen (102);
einer Einlaßeinrichtung (100) zum Einbringen des Flüssigkeitsstromes in das Verdampfungsvolumen (102);
einem dispergierenden Element (106) zum Dispergieren des Flüssigkeitsstromes im Verdampfungsvolumen (102) durch Ausüben einer mechanischen Schwingung auf den Flüssigkeitsstrom, wobei das Dispergieren nicht durch eine Druckänderung bedingt ist und ohne Beimischung eines Mediums erfolgt;
einer Heizvorrichtung, mit der das Verdampfungsvolumen (102) auf eine von der zu verdampfenden Flüssigkeit abhängigen Temperatur aufheizbar ist, so daß die dispergierte Flüssigkeit (110) vollständig verdampft; und
einer Auslaßeinrichtung (108) zum Herausführen des verdampften Flüssigkeitsstromes aus dem Verdampfungsvolumen.

7. Vorrichtung nach Anspruch 6, dadurch gekennzeichnet,
daß die Auslaßeinrichtung (108) eine Beimischvorrichtung (114) aufweist, die dem verdampften Flüssigkeitsstrom (112) ein oder mehrere Trägergase und/oder Prozeßgase hinzumischt.

8. Vorrichtung nach Anspruch 6 oder 7, dadurch gekennzeichnet,
daß die Auslaßeinrichtung (108) eine Vorrichtung (120) aufweist, die verhindert, daß nicht-verdampfte Flüssigkeit austritt.

9. Vorrichtung nach einem der Ansprüche 6 bis 8, dadurch gekennzeichnet,
daß das dispergierende Element (106) einen Ultraschallwandler aufweist.

## Claims

1. Method of converting a liquid flow into a gas flow, comprising the following method steps:
- introducing the liquid flow into an evaporation volume (102);
- supplying heat to said evaporation volume (102);
- dispersing the liquid flow into said evaporation volume (102) so as to enlarge the surface of the liquid, said dispersion being not caused by change of pressure, but by subjecting the liquid to a mechanical vibration, and taking place without any admixture of a medium into said evaporation volume (102); and
- conducting the evaporated liquid flow out of the evaporation volume (102).

2. Method according to claim 1, characterized by the following method steps:
- admixing one or several carrier gases and/or process gases to the evaporated liquid flow (112) when said evaporated liquid flow (112) has left the evaporation volume (102); and
- conducting the resultant gas flow (116) out of the apparatus via an outlet (118).

3. Method according to claim 1 or 2, characterized by the following method step:
- heating the evaporation volume (102) to a temperature depending on the liquid to be evaporated, in such a way that the dispersed liquid (110) evaporates completely.

4. Method according to one of the claims 1 or 2, characterized by the following method step:
- holding back non-evaporated liquid so that no non-evaporated liquid will be discharged.

5. Method according to one of the claims 1 to 4, characterized in
that the dispersion is effected by means of ultrasonic waves.

6. Apparatus for converting a liquid flow into a gas flow, comprising:
an evaporation volume (120);
an inlet means (100) for introducing the liquid flow into the evaporation volume (120);
a dispersing element (106) for dispersing the liquid flow in the evaporation volume (120) by subjecting the liquid flow to a mechanical vibration, said dispersion being not caused by a change of pressure and taking place without any admixture of a medium; and
a heating device by means of which the evaporation volume (102) can be heated to a temperature depending on the liquid to be evaporated so that the dispersed liquid (110) evaporates completely; and
a discharge means (108) for discharging the evaporated liquid flow out of the evaporation volume (120).

7. Apparatus according to claim 6, characterized in
that the discharge means (108) is provided with an admixing device (114) admixing to the evaporated liquid flow (112) one or more carrier gases and/or process gases.

8. Apparatus according to claim 6 or 7, characterized in
that the discharge means (108) is provided with a device (120) which prevents an escape of non-evaporated liquid.

9. Apparatus according to one of the claims 6 to 8, characterized in
that the dispersing element (106) is provided with an ultrasonic transducer.

## Revendications

1. Procédé pour transformer un courant liquide en un courant gazeux, comportant les étapes suivantes :
- introduction du courant liquide dans un volume d'évaporation (102),
- amenée de chaleur dans le volume d'évaporation (102),
- dispersion du courant liquide dans le volume d'évaporation (102) pour augmenter la surface du liquide, la dispersion étant réalisée par application d'une vibration mécanique sur le liquide, n'étant pas provoquée par une variation de pression et s'effectuant sans qu'un fluide soit introduit dans le volume d'évaporation (102), et
- extraction du courant liquide évaporé du volume d'évaporation (102).

2. Procédé selon la revendication 1, caractérisé par les étapes suivantes :
- addition, par mélange, d'un ou plusieurs gaz porteurs et/ou gaz de procédé au courant liquide évaporé (112), après que ce dernier est sorti du volume d'évaporation (102), et
- extraction, par une sortie (118), du courant gazeux (116) qui se forme.

3. Procédé selon la revendication 1 ou 2, caractérisé par les étapes suivantes :
- chauffage du volume d'évaporation (102) à une température qui dépend du liquide à évaporer, de façon que le liquide dispersé (110) subisse une évaporation complète.

4. Procédé selon l'une des revendications 1 ou 2, caractérisé par l'étape suivante :
- rétention du liquide non-évaporé, pour qu'il n'y pas de liquide non-évaporé en sortie.

5. Procédé selon l'une des revendications 1 à 4, caractérisé en ce que la dispersion s'effectue à l'aide d'ondes ultrasoniques.

6. Equipement pour transformer un courant liquide en un courant gazeux, comportant un volume d'évaporation (102),
un dispositif d'entrée (100) pour introduire le courant liquide dans le volume d'évaporation (102),
un élément disperseur, pour disperser le courant liquide dans le volume d'évaporation (102), par application d'une vibration mécanique sur le courant liquide, la dispersion n'étant pas provoquée par une variation de la pression et s'effectuant sans addition d'un fluide,
un dispositif de chauffage, à l'aide duquel le volume d'évaporation (102) peut être chauffé à une température qui dépend du liquide à évaporer, de façon que le liquide dispersé (110) soit entièrement évaporé, et
un dispositif de sortie (108), pour extraire du volume d'évaporation le courant liquide évapore.

7. Equipement selon la revendication 6, caractérisé en ce que le dispositif de sortie (108) comporte un appareil mélangeur (114) qui introduit dans le courant liquide évaporé (112), en mélangeant, un ou plusieurs gaz porteurs et/ou gaz de procédé.

8. Equipement selon la revendication 6 ou 7, caractérisé en ce que le dispositif de sortie (108) comporte un appareil (120) qui empêche la sortie du liquide non-évaporé.

9. Equipement selon l'une des revendications 6 à 8, caractérisé en ce que l'élément disperseur (108) comporte un transducteur à ultrasons.
